# EUROPÄISCHE PATENTSCHRIFT

(11) **EP 2 224 104 B1**
(45) Veröffentlichungstag und Bekanntmachung des Hinweises auf die Patenterteilung: **21.03.2012**
(21) Anmeldenummer: 09153976.7
(22) Anmeldetag: 27.02.2009
(51) Int. Cl.: F01K 13/02

(54) **Verfahren zum Betreiben eines Kraftwerks**
Method for operating a power plant
Procédé destiné au fonctionnement d'une centrale

(43) Veröffentlichungstag der Anmeldung: 01.09.2010
(73) Patentinhaber: STEAG Energy Services GmbH, 45128 Essen (DE)
(72) Erfinder: Neumann, Dirk, 45259 Essen (DE); Kurth, Marcus, 47166 Duisburg (DE); Sommer, Udo, 59069 Hamm (DE)
(74) Vertreter: Zenz

(56) Entgegenhaltungen:
- FR-A- 2 916 101
- US-A- 5 924 287
- US-A1- 2003 218 385
- FALGENHAUER G: "BEITRAGSMOEGLICHKEITEN DER SPEISEWASSER-, KONDENSAT- UND ANZAPFDAMPFSTROEME ZUR SCHNELLEN LEISTUNGSAENDERUNG FOSSIL BEFEUERTER KRAFTWERKSBLOECKE" VGB KRAFTWERKSTECHNIK, VGB KRAFTWERKSTECHNIK GMBH. ESSEN, DE, Bd. 60, Nr. 1, 1. Januar 1980 (1980-01-01), Seiten 18-23, XP000670759 ISSN: 0372-5715
- SINDELAR R: "GEWAEHRLEISTUNG DER SEKUNDENDYNAMIK EINES DAMPFKRAFTWERKSBLOCKES" VGB KRAFTWERKSTECHNIK, VGB KRAFTWERKSTECHNIK GMBH. ESSEN, DE, Bd. 71, Nr. 1, 1. Januar 1991 (1991-01-01), Seiten 4-13, XP000178871 ISSN: 0372-5715

## Beschreibung

Die Erfindung betrifft ein Verfahren zum Betreiben eines Kraftwerks derart, dass dann, wenn ausgehend von einem Grundzustand eine sprunghafte Erhöhung oder Absenkung der von dem Kraftwerk abgegebenen Gesamtleistung (Momentanleistung) erforderlich wird, kurzfristig eine (entsprechende) positive bzw. negative Reserveleistung bereitgestellt wird. Ein solches Verfahren ist z.B. in Dokument US-A-5924287 offenbart.

Für Kraftwerke, die in einem Netzverbund zusammenarbeiten, gibt es bestimmte Anforderungen hinsichtlich der vorzuhaltenden Reserveleistung. Da Elektroenergie nicht in nennenswertem Umfang speicherbar ist, muss in einem Netzverbund stets ein Gleichgewicht zwischen der von den Kraftwerken eingespeisten Leistung und der von Verbrauchern entnommenen Leistung hergestellt werden. In einem Normalbetrieb wird dieses Leistungsgleichgewicht bei einer Sollfrequenz erreicht, die in Europa 50 Hz beträgt, wobei die durch das Netz frequenzstarr gekoppelten Kraftwerksgeneratoren mit konstanter Drehzahl rotieren. Jede Störung des Leistungsgleichgewichts hat eine Drehzahl-und damit Frequenzänderung zur Folge. Die Aufrechterhaltung des Leistungsgleichgewichts wird in den beteiligten Kraftwerken durch Vorhaltung von Reserveleistung erreicht. Um auf Störungen oder nahezu sprunghaft veränderte Lastanforderungen der Verbraucher reagieren zu können, muss Reserveleistung seitens der Erzeuger vorgehalten werden. So gilt beispielsweise nach den derzeitigen Bestimmungen in Deutschland bzw. Europa, dass die elektrische Wirkleistung eines beteiligten Kraftwerkblocks innerhalb von 30 s um mindestens 2 % gesteigert werden kann (vgl. Verband der Netzbetreiber VDN e.V. beim VDEW, "Transmission Code 2007 - Netz- und Systemregeln der deutschen Übertragungsnetzbetreiber", Version 1.1, Berlin, August 2007, Kapitel 3.3.7.1, Seite 27/90 bzw. UCTE Operation Handbook, Policy P1, Brussel, V2.2, 20.07.2004).

Eine derart schnelle Änderung der von dem Kraftwerk abgegebenen Leistung kann bei einem "brennstoffbetriebenen Kraftwerk", unter dem hier ein fossile Brennstoffe verbrennendes Kraftwerk oder ein Kernkraftwerk verstanden werden soll, nicht durch Änderung des Brennstoffumsatzes (Änderung der zugeführten fossilen Brennstoffmenge bzw. Änderung der Stellung der Steuer- und Absorberstäbe bei einem Kernkraftwerk) erzielt werden. Aus diesem Grund werden bei derartigen Kraftwerken üblicherweise die Turbineneinlassventile nicht voll geöffnet (so dass die Leistungsabgabe allein vom Ausgangsdruck des Dampferzeugers abhängen würde), sondern angedrosselt, um eine Sekundenreserve durch Öffnen der Ventile zur Verfügung stellen zu können. Eine andere bekannte Möglichkeit, eine schnelle Sekundenreserve zur Verfügung zu stellen, besteht darin, kurzzeitig und vorübergehend dampf- und/oder wasserseitig Hochdruck- oder Niederdruck-Vorwärmer abzuschalten, um die für diese Elemente aus den Turbinen abgezweigte Energie für die Turbinen zu gewinnen (d.h. in den Turbinen zu belassen).

Nachteilig bei den genannten Maßnahmen ist die Verringerung des Wirkungsgrades der Anlage bzw. eine nicht wirtschaftliche Vorhaltung von Reserveleistung, die beispielsweise mit der andauernden Androsselung der Turbineneinlassventile verbunden ist. Aufgabe der Erfindung ist es daher, diese Nachteile zu vermeiden.

Erfindungsgemäß wird die Aufgabe durch ein Verfahren mit den Merkmalen des Anspruchs 1 gelöst. Die Erfindung basiert auf dem Grundgedanken, durch Schaffung eines Hybrid-Kraftwerks mit einer zusätzlichen solarthermischen Erwärmung von Trägerfluiden die sich dadurch bietenden Möglichkeiten einer schnellen Leistungsänderung auszunutzen.

Bei einem erfindungsgemäßen Verfahren zum Betreiben eines Hybrid-Kraftwerks mit einer brennstoffbetriebenen und einer solarthermischen Erwärmung von Trägerfluiden basiert ein erster Anteil der von dem Kraftwerk abgegebenen Gesamtleistung auf der brennstoffbetriebenen Erwärmung von Trägerfluiden und ein zweiter Anteil der von dem Kraftwerk abgegebenen Gesamtleistung auf der solarthermischen Erwärmung von Trägerfluiden. Die von einem solarthermisch erwärmten Trägerfluid aufgenommene Wärme wird an einen Kreislauf eines Trägerfluids eines brennstoffbetriebenen Kraftwerkteils übertragen. Wenn ausgehend von einem Grundzustand eine sprunghafte Erhöhung oder Absenkung der von dem Kraftwerk abgegebenen Gesamtleistung erforderlich wird, wird zunächst kurzfristig der auf der solar-thermischern Erwärmung basierende zweite Anteil entsprechend erhöht bzw. abgesenkt, um eine positive bzw. negative Reserveleistung bereitzustellen. Anschließend wird der auf der brennstoffbetriebenen Erwärmung basierende erste Anteil langsam entsprechend erhöht bzw. abgesenkt und entsprechend der auf der solarthermischen Erwärmung basierende zweite Anteil wieder abgesenkt bzw. erhöht. Die langsame Erhöhung bzw. Absenkung des auf der brennstoffbetriebenen Erwärmung basierenden ersten Anteils kann unmittelbar nach der vorhergehenden kurzfristigen Erhöhung bzw. Absenkung des auf der solarthermischern Erwärmung basierenden zweiten Anteils einsetzen; sie kann aber auch erst zu einem späteren Zeitpunkt beginnen. Ferner braucht die entsprechende langsame Absenkung bzw. Erhöhung des auf der solarthermischen Erwärmung basierenden zweiten Anteils (d.h. die Wiederherstellung der Reserve) nicht synchron zur langsamen Erhöhung bzw. Absenkung des auf der brennstoffbetriebenen Erwärmung basierenden ersten Anteils zu erfolgen. Der auf der solarthermischen Erwärmung basierende zweite Anteil wird durch Fokussierung bzw. Defokussierung von Solarkollektoren, durch erhöhten oder abgesenkten Durchsatz des solarthermisch erwärmten Trägerfluids und/oder durch Leerung bzw. Füllen eines mit dem solarthermisch erwärmten Trägerfluid befüllten Speichers erhöht bzw. abgesenkt.

Die auf der hinzugefügten solarthermischen Erwärmung von Trägerfluiden basierende Möglichkeit der Bereitstellung einer Sekundenreserve hat zudem den Vorteil, dass die Investitions-und Betriebskosten für die solarthermische Stromerzeugung durch die Einbindung in die bereits vorhandene oder eine ohnehin erforderliche brennstoffbetriebene Energieerzeugung gesenkt werden. Außerdem ermöglicht die Nutzung der brennstoffbetriebenen Energieerzeugung einen Rund-um-die-Uhr-Betrieb auf wirtschaftliche Weise.

Ein weiterer Vorteil der erfindungsgemäßen Kombination der brennstoffbetriebenen und solarthermischen Erwärmung von Trägerfluiden besteht darin, dass Anfahrvorgänge des brennstoffbetriebenen Kraftwerkteils wirtschaftlicher gestaltet werden können.

Bei einer bevorzugten Ausführungsform wird der Kreislauf des Trägerfluids des brennstoffbetriebenen Kraftwerkteils, an den die von einem solarthermisch erwärmten Trägerfluid aufgenommene Wärme übertragen wird, mit einer Turbineneinheit gekoppelt, so dass das solarthermisch erwärmte Trägerfluid nicht mit einer separaten Turbineneinheit gekoppelt zu werden braucht. Diese Mitverstromung des solarthermisch erzeugten Energieanteils in dem Turbosatz des brennstoffbetriebenen Kraftwerkteils führt zu einem deutlich besseren Wirkungsgrad und einer besseren Ausnutzung der solarthermisch bereitgestellten Energie, als dies bei einem separaten Turbosatz für eine rein solarthermische Stromerzeugung der Fall wäre. Außerdem reduzieren sich durch eine solche Ankopplung die Investitions- und Betriebskosten für die solarthermische Stromerzeugung erheblich. Auf der Investitionsseite entfallen im Wesentlichen die Kosten für einen eigenen Wasser-Dampf-Kreislauf einschließlich Dampfturbinensatz, den Kühlkreislauf am kalten Ende und die Stromableitung. Auf der Betriebskostenseite reduzieren sich die laufenden Kosten für Personal, Reparatur, Revision, Wartung und Versicherungen.

Bei einer bevorzugten Ausführungsform beträgt der zweite Anteil der von dem Kraftwerk abgegebenen Gesamtleistung, der auf der solarthermischen Erwärmung von Trägerfluiden basiert, weniger als 50 %, vorzugsweise weniger als 30 %. Dies ermöglicht einen Rund-um-die-Uhr-Betrieb bei einer hohen abgegebenen Leistung auch während der Zeiten des Tages, in denen keine oder nur eine geringe Sonnenstrahlung vorhanden ist.

Um die eingangs genannten Anforderungen der Sekundenreserve vollständig durch die solarthermische Erwärmung eines Trägerfluids zu erfüllen, ist es bei einer bevorzugten Ausführungsform vorgesehen, dass bei der kurzfristigen Erhöhung bzw. Absenkung des auf der solarthermischen Erwärmung basierenden zweiten Anteils die abgegebene Gesamtleistung mit einer Rate von etwa 2 - 5 % innerhalb eines Zeitintervalls von weniger 30 s, vorzugsweise von etwa 3 - 5 % in weniger als 5 s, erhöht bzw. abgesenkt wird. Diese Rate kann einstellbar und veränderbar bzw. der Laständerung äquivalent sein. Vorzugsweise ist das Verfahren dadurch gekennzeichnet, dass bei der anschließenden langsamen Erhöhung bzw. Absenkung des auf der brennstoffbetriebenen Erwärmung basierenden ersten Anteils die abgegebene Leistung mit einer Rate von 2 - 5 % innerhalb eines Zeitintervalls von mindestens 1,5 min, vorzugsweise mindestens 3 min, erhöht bzw. abgesenkt wird, wie dies beispielsweise bei konventionellen brennstoffbetriebenen Kraftwerken üblich ist.

Vorzugsweise wird die von dem solarthermisch erwärmten Trägerfluid aufgenommene Wärme an einen Wasser-Dampf-Kreislauf des brennstoffbetriebenen Kraftwerks übertragen. Bei einer Ausführungsform, bei der auch das solarthermisch erwärmte Trägerfluid Wasser oder Dampf umfasst, wird dieses direkt in den Wasser-Dampf-Kreislauf des brennstoffbetriebenen Kraftwerkteils eingespeist. Bei einer anderen Ausführungsform wird die von dem solarthermisch erwärmten Trägerfluid aufgenommene Wärme mittels eines Wärmetauschers an den Wasser-Dampf-Kreislauf übertragen.

Bei einer bevorzugten Weiterbildung der Erfindung wird die von dem solarthermisch erwärmten Trägerfluid aufgenommene Wärme an ein Speisewasser des brennstoffbetriebenen Kraftwerkteils übertragen. Durch die Verwendung solarthermisch erzeugter Wärme zur Speisewassererwärmung braucht hierfür weniger Dampf von den Turbinen abgezweigt zu werden, wodurch noch schneller die erforderliche Reserveleistung bereitgestellt werden kann. Die von dem solarthermisch erwärmten Trägerfluid aufgenommene Wärme kann mittels eines Wärmetauschers (im Hochdruckbereich) auf das aus einem Speisewasserbehälter entnommene und einem Dampferzeuger zuzuführende Speisewasser übertragen werden. Sie kann auch mittels eines Wärmetauschers (im Niederdruckbereich) auf das aus einem einer Turbine nachgeschalteten Kondensator austretende und einem Speisewasserbehälter zuzuführende Speisewasser übertragen werden. Schließlich kann die Wärme mittels eines Wärmetauschers auf Wasser übertragen werden, welches aus einem Deionat-Vorrat einem Speisewasserbehälter zugeführt wird.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsbeispielen näher erläutert.

In den Zeichnungen zeigen:
Figur 1 eine schematische Darstellung eines Ausführungsbeispiels eines Hybrid-Kraftwerks, das gemäß dem erfindungsgemäßen Verfahren betrieben wird, und
Figur 2 eine zweite Ausführungsform eines Hybrid-Kraftwerks, das erfindungsgemäß betrieben wird.

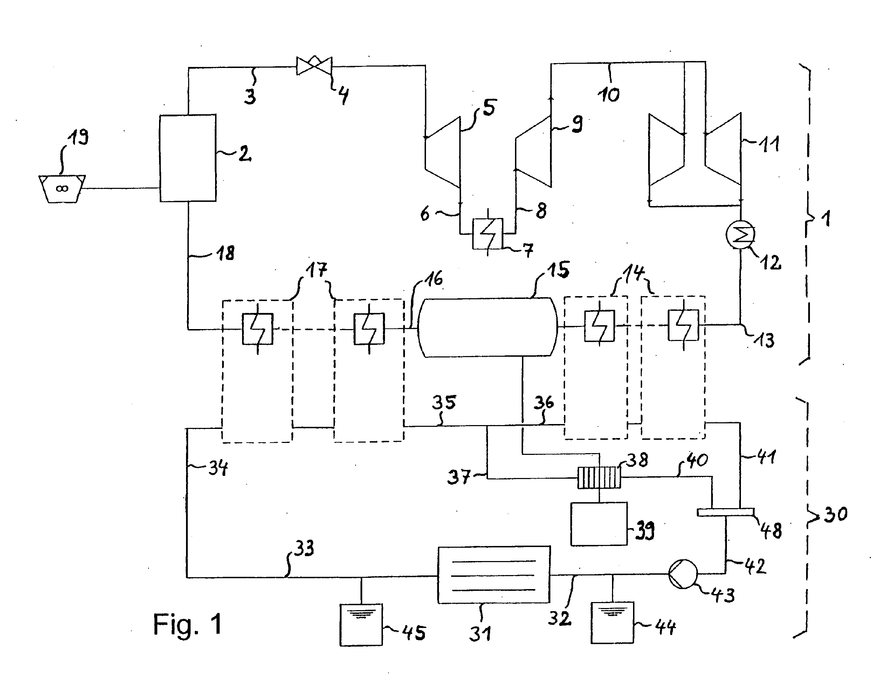

Figur 1 zeigt eine schematische Prinzipdarstellung eines Hybrid-Kraftwerks, welches nach dem erfindungsgemäßen Verfahren betrieben werden kann. Das dargestellte Hybrid-Kraftwerk weist zunächst einen brennstoffbetriebenen Kraftwerkteil 1 auf, bei dem durch Verbrennen eines fossilen Brennstoffs, beispielsweise Kohle, mittels eines Dampferzeugers 2 Dampf erzeugt und über eine Frischdampfleitung 3, in welche in der Regel ein Turbineneinlassventil 4 eingebunden ist, einer HD-Turbine 5 zugeführt wird. Der die HD-Turbine 5 verlassende Dampf wird über eine Leitung 6 einer heißen Zwischenüberhitzung (HZÜ) 7 zugeführt und gelangt dann über die Leitung 8 zu einer MD-Turbine 9 und anschließend über die Leitung 10 zu einer ND-Turbine 11. Von dort gelangt der Dampf in einen Kondensator 12. Hier kondensiert der Dampf, und das entstehende Wasser wird über die Leitung 13 mehreren hintereinander geschalteten ND-Vorwärmern 14 zugeführt. Das die ND-Vorwärmer 14 verlassende Wasser gelangt in den Speisewasserbehälter 15 und bildet den Speisewasservorrat. Ein (hier nicht dargestelltes) Pumpensystem fördert das Speisewasser aus dem Speisewasserbehälter 15 über die Leitung 16 durch einen oder mehrere hintereinander angeordnete HD-Vorwärmer 17 hindurch, bevor das erhitzte Speisewasser unter Druck wieder in den Dampferzeuger 2 gelangt, womit der Kreislauf geschlossen ist.

Der dem Verbrennungsraum am Dampferzeuger 2 zugeführte Brennstoff (Kohle) wird beispielsweise aus Walzenschüsselmühlen 19, welche die Kohle zerkleinern, zugeführt. Zum Vorwärmen des Speisewassers in den ND-Vorwärmern 14 und zum Aufwärmen des Speisewassers in den HD-Vorwärmern 17 wird üblicherweise Dampf verwendet, der an geeigneter Stelle aus dem Kreislauf, beispielsweise an den Turbinen oder an der HZÜ abgezweigt wird. Durch das Abzweigen des heißen Dampfes, der den Wärmetauschern in den Vorwärmern 14 und 17 zugeführt wird, steht weniger Dampf für den Antrieb der Turbinen zur Verfügung, was deren Leistung mindert.

Deshalb wird bei dem erfindungsgemäßen Betrieb des Kraftwerks ein Teil der Wärme dieses abgezweigten Dampfes ersetzt durch die Wärme eines solarthermisch erhitzten Trägerfluids, d.h. weniger Dampf für die Vorwärmer 14 und/oder 17 abgezweigt und statt dessen das Speisewasser mit Hilfe des solarthermisch erhitzten Trägerfluids in parallelen Wärmetauschern der Vorwärmer 14 bzw. 17 erwärmt. Insbesondere kann der ersetzte Anteil des Dampfes kurzfristig geändert (erhöht oder abgesenkt) werden. Zu diesem Zweck weist das in Figur 1 dargestellte Kraftwerk einen solarthermischen Teil 30 auf. Der solarthermische Teil 30 weist ein Solarthermiefeld 31 auf, das aus verstellbaren Strahlungskollektoren, wie Parabolrinnenkollektoren, Fresnel-Kollektoren oder anderen, besteht. Dem Solarthermiefeld wird über eine Leitung 32 ein solarthermisch zu erwärmendes Trägerfluid zugeführt. Das aus dem Solarthermiefeld 31 austretende erhitzte Trägerfluid gelangt über Leitung 33 und Leitung 34 zu einem oder mehreren HD-Vorwärmern 17. Bei dem in Figur 1 dargestellten Beispiel wird das erhitzte Trägerfluid im Gegenstrom durch Wärmetauscher der HD-Vorwärmer 17 geleitet, so dass es auf derjenigen Seite in den ersten HD-Vorwärmer 17 eintritt, auf der über Leitung 18 das erhitzte Speisewasser austritt. Das aus den HD-Vorwärmern über Leitung 35 austretende Trägerfluid gelangt über Leitung 36 zu einem oder mehreren ND-Vorwärmern 14 zum Vorwärmen des Speisewassers. Über Leitung 37 wird das Trägerfluid einem Wärmetauscher 38 zugeführt, wo es Wärme an ein aus einem Deionattank 39 entnommenes Deionat abgibt, welches dem Speisewasservorrat im Speisewasserbehälter 15 zugeführt wird. Das über Leitung 40 aus dem Wärmetauscher 38 austretende Trägerfluid sowie das über Leitung 41 aus den ND-Vorwärmern 14 austretende Trägerfluid wird gesammelt und über Leitung 42 einer Solarfeldpumpe 43 zugeführt, welche wiederum das Trägerfluid 32 in das Solarthermiefeld 31 einspeist. An die Leitung 32 ist ein Ausdehnungsbehälter 44 und an die Leitung 33 ein Ausdehnungsbehälter 45 angekoppelt.

Bei dem in Figur 1 dargestellten Ausführungsbeispiel wird die Wärme des solarthermisch erwärmten Trägerfluids sowohl zum zusätzlichen Erwärmen des Speisewassers in den HD-Vorwärmern 17 als auch zum Vorwärmen des Speisewassers in den ND-Vorwärmern 14 sowie zum Vorwärmen des Deionats im Wärmetauscher 38 verwendet. Bei alternativen Ausführungsformen kann auch nur ein Teil dieser Möglichkeiten realisiert sein. Darüber hinaus sind weitere Möglichkeiten einer Übertragung der Wärme des solarthermisch erwärmten Trägerfluids auf den Wasser-Dampf-Kreislauf des brennstoffbetriebenen Kraftwerkteils 1 denkbar. Beispielsweise könnte ein Wärmetauscher direkt im Speisewasserbehälter 15 vorgesehen sein.

Darüber hinaus werden vorzugsweise die Wärmeinhalte sämtlicher mit dem solarthermisch erwärmten Trägerfluid aufladbaren Speicher (Speisewasservorrat, Deionattank, in den HD- und ND-Vorwärmern gespeicherte Wärme) verfolgt, so dass im Fall einer plötzlichen Reserveleistungsanforderung flexibel und optimiert entschieden werden kann, wie solarthermisch erzeugte Wärme eingesetzt werden kann. So kann diejenige Stelle ausgewählt werden, die zum besten Ergebnis führt.

Bei dem in Figur 1 dargestellten Ausführungsbeispiel ist der Kreislauf des Trägerfluids des Solarthermie-Teils 30 des Kraftwerks getrennt vom Wasser-Dampf-Kreislauf des brennstoffbetriebenen Kraftwerkteils 1. Bei einem solchen geschlossenen System wird die Wärme auf den Wasser-Dampf-Kreislauf ausschließlich indirekt über Wärmetauscher übertragen. Dies erlaubt die Verwendung von optimierten solarthermischen Trägerfluiden, wie beispielsweise Thermalöle mit hohen Verdampfungstemperaturen, und damit den Betrieb bei geringeren Drücken.

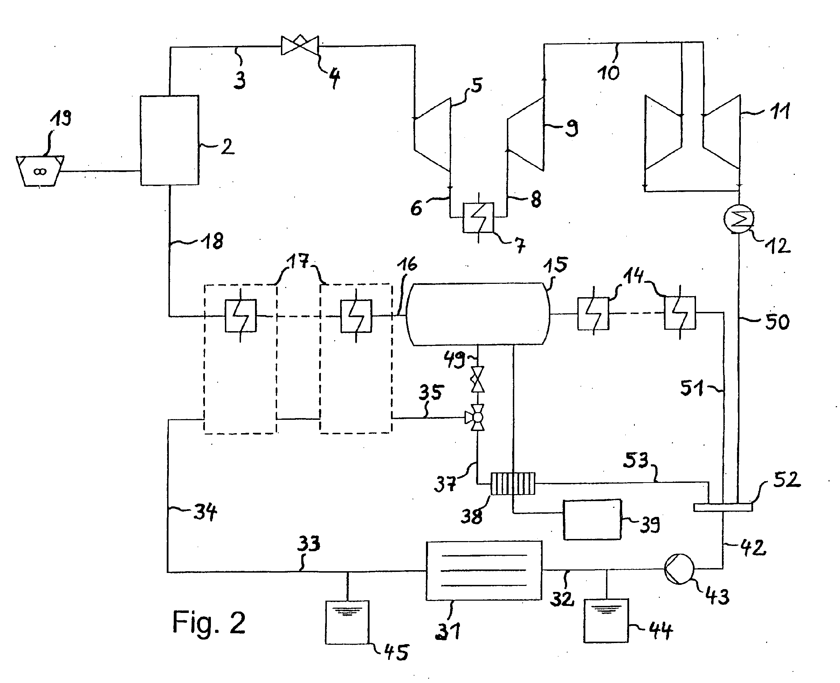

Figur 2 zeigt eine alternative Ausführungsform des Hybrid-Kraftwerks, bei der eine offene Einbindung verwendet wird. Dies bedeutet, dass solarthermisch erwärmtes Heißwasser oder Dampf an einer oder mehreren Stellen in den Wasser-Dampf-Kreislauf des brennstoffbetriebenen Kraftwerkteils eingebracht wird. An einer anderen Stelle wird Wasser zur Speisung des Solarthermiefeldes 31 aus dem Wasser-Dampf-Kreislauf entnommen.

Bei dem in Figur 2 dargestellten Ausführungsbeispiel sind diejenigen Bestandteile, die den bereits in Figur 1 gezeigten entsprechen, mit denselben Bezugszeichen gekennzeichnet. Der Kreislauf des brennstoffbetriebenen Kraftwerkteils besteht wiederum aus dem Dampferzeuger 2, der Frischdampfleitung 3, dem Turbineneinlassventil 4, der HD-Turbine 5, der Leitung 6, der heißen Zwischenüberhitzung 7, der Leitung 8, der MD-Turbine 9, der Leitung 10, der ND-Turbine 11, dem Kondensator 12, den ND-Vorwärmern 14, dem Speisewasserbehälter 15, der Leitung 16 (mit der nicht gezeigten Druckpumpe), den HD-Vorwärmern 17 und der Leitung 18. Im betrachteten Beispiel wird Wasser aus dem Kondensatbereich des brennstoffbetriebenen Kraftwerksteils entnommen und der solarthermischen Anlage 30 zugeführt. Dies kann wie dargestellt mittels einer Leitung 50 von dem Kondensator 12 zu einer Sammelstelle 52 und eine Leitung 51 von der Sammelstelle zu den ND-Vorwärmern 14 realisiert werden. Alternativ kann die Leitung 51 zur Speisung der ND-Vorwärmer auch direkt aus der Leitung 50 mit einem geeigneten Regelventil abgezweigt werden. Bei dem in Figur 2 gezeigten Ausführungsbeispiel wird ferner das über Leitung 34 in die HD-Vorwärmer 17 eintretende und über Leitung 35 wieder austretende solarthermisch erwärmte Wasser nicht den Wärmetauschern der ND-Vorwärmer zugeführt. Stattdessen gibt es eine Leitung 49, über die das aus der Leitung 35 austretende solarthermisch erwärmte Wasser direkt dem Speisewasserbehälter 15 zugeführt werden kann. Über Leitung 37 kann das aus Leitung 35 austretende solarthermisch erwärmte Wasser dem Wärmetauscher 38 und dann über Leitung 53 der Sammelstelle 52 zugeführt werden. Das dem Solarthermiefeld 31 zuzuführende Wasser wird ebenfalls aus der Sammelstelle 52 über die Leitung 42 und die Solarfeldpumpe 43 zugeführt.

Bei einer bevorzugten Ausführungsform des in Figur 2 dargestellten Ausführungsbeispiels ist, das das Solarthermiefeld 31 über die Leitung 33 verlassende Trägerfluid Heißwasser. Dies hat gegenüber Dampf den Vorteil, dass das Gesamtsystem einfacher ausführbar ist, da ein aufwändiges Kondensat-/Entwässerungsmanagement nicht erforderlich ist. Ebenso entfällt eine Siedetrommel.

Beide in den Figuren dargestellten Ausführungsbeispiele zeigen eine Erwärmung des aus dem Deionattank 39 dem Speisewasserbehälter 15 zugeführten Deionats mittels des Wärmetauschers 38. Zusätzlich oder alternativ ist es auch denkbar, dass ein Wärmetauscher direkt im Deionattank angeordnet wird, so dass dieser selbst als Wärmespeicher dienen kann. Das in diesem Fall aus dem Wärmetauscher des Deionattanks 39 austretende Wasser, welches über Leitung 40 bzw. 53 einer Sammelstelle 48 bzw. 52 zugeführt wird, weist dementsprechend eine geringere Rücklauftemperatur auf. Diese ermöglicht eine kleinere Dimensionierung der verbindenden Rohrleitungen zwischen Sammelstelle und Solarthermiefeld.

Im Normalbetrieb der in den Figuren dargestellten Kraftwerksanlagen erfolgt die Bereitstellung von solarthermisch erzeugter Leistung an das Dampfkraftwerk, sobald im Solarthermiefeld eine ausreichende Wärmeproduktion einsetzt, bei der die Solarfeldpumpe energetisch sinnvoll betrieben werden kann. Mit Einsetzen der Mindestumwälzmenge der Solarfeldpumpe 43 beginnt die Wärmeabgabe an den Einspeisepunkten. Ein mit flüssigem Trägerfluid anstelle von Dampf arbeitendes System hat den Vorteil, dass das System nicht erst auf den Verdampfungspunkt aufgeheizt zu werden braucht, sondern bereits Wärme an den Einspeisepunkten abgeben kann, sobald ein solcher Wärmetransport sinnvoll ist. Dies führt zu reduzierten Aufwärmverlusten und in kühlen Morgen- oder Abendstunden mit niedrigerer Außentemperatur zu geringeren Wärmeverlusten an die Umgebung. Der nutzbare Gesamtertrag aus dem Solarthermiefeld steigt. Mit Zunahme der Wärmeproduktion im Solarthermiefeld können dann ab einer bestimmten Vorlauftemperatur sämtliche oben genannten Wärmequellen des brennstoffbetriebenen Kraftwerkteils versorgt werden. Die Verwendung eines flüssigen Trägerfluids in der oben beschrieben Einbinde-Situation bietet zudem den Vorteil, dass durchziehende Wolkenfelder durch Wärmespeicher im Solarfeld abgefangen werden und keine solarthermische Dampfproduktion abreißen kann. Das Durchziehen solcher Wolkenfelder führt lediglich zu einer gleitenden Vorlauftemperatur.

Erfindungsgemäß bietet die Anlage die Möglichkeit zur Bereitstellung von Reserveenergie im Sekundenbereich. Darüber hinaus kann über die Solarthermie-Anlage auch Reserve- oder andere zusätzliche Leistung zur dynamischen Änderung der Blockleistung auch im Minutenbereich bereitgestellt werden. Die Leistung des Blockes (brennstoffbetriebener Kraftwerksteil) kann damit schnell um den Betrag der Leistung des Solarthermiefeldes geändert werden. Die durch das Solarthermiefeld erzeugte Leistung wiederum kann relativ schnell geändert werden, indem beispielsweise die Solarkollektoren fokussiert bzw. defokussiert werden, weitere Solarkollektoren zugeschaltet oder Solarkollektoren abgeschaltet werden. Zudem kann die Vorlauftemperatur (in Leitung 33) gezielt durch Erhöhung oder Reduktion der Umwälzmenge und durch einen Betrieb innerhalb der Materialgrenzen verringert oder erhöht werden. Insbesondere kann die Leistung schnell durch die Turbinen abgegeben werden, und zwar indem in dem gleichen Maße, wie solarthermisch erzeugte Energie den HD-Vorwärmern 17 oder den ND-Vorwärmern 14 zugeführt wird, ein entsprechend geringerer Betrag von Leistung aus den Turbinen zur Vorwärmung entnommen wird. Gleiches gilt selbstverständlich auch für andere Wärmetauscher, die ihre Wärme aus Dampf entnehmen, der aus den Turbinen entnommen wurde. Darüber hinaus kann die solarthermisch erzeugte Wärme umverteilt werden, indem die Menge des einen Wärmetauscher durchströmenden Trägerfluids reduziert und die Menge des einen anderen Wärmetauscher durchströmenden Trägerfluids entsprechend erhöht wird. Beispielsweise ist eine Umverteilung von den ND-Vorwärmern auf die HD-Vorwärmer oder umgekehrt denkbar. Weitere Leistungs-Umverteilungen sind durch ein gezieltes Absenken der Rücklauftemperatur und Zuschalten weiterer ND-Vorwärmer denkbar. Soll eine schnelle dynamische Leistungsreduktion erzielt werden, so können einerseits die Solarkollektoren defokussiert werden, andererseits kann Wärme, die direkt in den Wasser-Dampf-Kreislauf eingespeist wird, in Wärmespeicher umgelenkt werden, beispielsweise in den Deionattank. Darüber hinaus könnte Wärmeleistung aus den HD-Vorwärmern zu den ND-Vorwärmern verschoben werden. Auch könnte eine Turbinenanzapfung zu den ND-Vorwärmern oder den HD-Vorwärmern zugeschaltet und die Solarfeldwärme in einen der genannten Speicher verschoben werden.

Die anhand der Figuren 1 und 2 beschriebene Kopplung eines brennstoffbetriebenen Kraftwerkteils 1 mit der solarthermischen Erwärmung von Trägerfluiden und der Einspeisung der solarthermisch erzeugten Wärme in den Wasser-Dampf-Kreislauf des Kraftwerkteils 1 hat auch Vorteile beim Anfahren eines Kraftwerks nach einem Stillstand. Beispielsweise kann die solarthermisch erzeugte Wärme zum Warmhalten von Teilanlagen, beispielsweise des Kessels oder des Speisewasserbehälters, oder - beim Anfahren - zum Vorwärmen des Speisewasserbehälters und anderer Teilanlagen verwendet werden. Insbesondere bei Anlagen, die häufig an- und abgefahren werden, ergeben sich große Einsparungen durch einen verringerten oder entfallenden Einsatz von Anfahrbrennstoffen.

Bei einer Ausführungsform kann eine kleine ND-Turbine oder ein Stirlingmotor an den Speisewasserbehälter 15 derart angeschlossen sein, dass dort entstehender Dampf an die kleine ND-Turbine/den Stirlingmotor abgegeben werden kann. Bei Stillstand des brennstoffbetriebenen Kraftwerkteils kann das solarthermisch im Solarthermiefeld 31 erhitzte Trägerfluid (Heißwasser) in den Speisewasserbehälter eingespeist werden und das Speisewasser aufheizen. Dabei entstehender Dampf kann dann an diese kleine ND-Turbine/den Stirlingmotor abgegeben werden.

Im Rahmen des in den Patentansprüchen umschriebenen Erfindungsgedankens sind zahlreiche alternative Ausführungsformen denkbar. Beispielsweise könnten mehrere Blöcke brennstoffbetriebener Kraftwerkteile mit jeweils getrennten Wasser-Dampf-Kreisläufen mit einem gemeinsamen Solerthermiefeld gekoppelt sein. Alternativ können auch mehrere Solarthermie-Kreisläufe vorgesehen sein, die an verschiedenen Stellen Wärme an den Wasser-Dampf-Kreislauf des brennstoffbetriebenen Kraftwerks übertragen. Anstelle eines Kohle verbrennenden Kraftwerkteils kann auch ein Kraftwerkteil verwendet werden, der irgendeinen anderen Brennstoff (z.B. Gas, Öl, Müll) verbrennt. Der solarthermische Teil kann auch mit einem Kernkraftwerk gekoppelt sein.

## Patentansprüche

1. Verfahren zum Betreiben eines Hybrid-Kraftwerks mit einer brennstoffbetriebenen und einer solarthermischen Erwärmung von Trägerfluiden,
wobei ein erster Anteil der von dem Kraftwerk abgegebenen Gesamtleistung auf der brennstoffbetriebenen Erwärmung von Trägerfluiden und ein zweiter Anteil der von dem Kraftwerk abgegebenen Gesamtleistung auf der solarthermischen Erwärmung von Trägerfluiden basiert,
wobei von einem solarthermisch erwärmten Trägerfluid aufgenommene Wärme an einen Kreislauf eines Trägerfluids eines brennstoffbetriebenen Kraftwerkteils (1) übertragen wird,
wobei dann, wenn ausgehend von einem Grundzustand eine sprunghafte Erhöhung oder Absenkung der von dem Kraftwerk abgegebenen Gesamtleistung erforderlich wird,
zunächst kurzfristig der auf der solarthermischen Erwärmung basierende zweite Anteil entsprechend erhöht bzw. abgesenkt wird, um eine positive bzw. negative Reserveleistung bereitzustellen, und
anschließend der auf der brennstoffbetriebenen Erwärmung basierende erste Anteil langsam entsprechend erhöht bzw. abgesenkt und entsprechend der auf der solarthermischen Erwärmung basierende zweite Anteil wieder abgesenkt bzw. erhöht wird,
wobei der auf der solarthermischen Erwärmung basierende zweite Anteil
durch Fokussierung bzw. Defokussierung von Solarkollektoren,
durch erhöhten oder abgesenkten Durchsatz des solarthermisch erwärmten Trägerfluids und/oder
durch Leerung bzw. Füllen eines mit dem solarthermisch erwärmten Trägerfluid befüllten Speichers erhöht bzw. abgesenkt wird.

2. Verfahren nach Anspruch 1, **dadurch gekennzeichnet, dass** der Kreislauf des Trägerfluids des brennstoffbetriebenen Kraftwerkteils (1), an den die von einem solarthermisch erwärmten Trägerfluid aufgenommene Wärme übertragen wird, mit einer Turbineneinheit (5 - 11) gekoppelt ist, so dass das solarthermisch erwärmte Trägerfluid nicht mit einer separaten Turbineneinheit gekoppelt zu werden braucht.

3. Verfahren nach Anspruch 1 oder 2, **dadurch gekennzeichnet, dass** der zweite Anteil der von dem Kraftwerk abgegebenen Gesamtleistung, der auf der solarthermischen Erwärmung von Trägerfluiden basiert, weniger als 50 %, vorzugsweise weniger als 30 %, beträgt.

4. Verfahren nach einem der Ansprüche 1 - 3, **dadurch gekennzeichnet, dass** bei der kurzfristigen Erhöhung bzw. Absenkung des auf der solarthermischen Erwärmung basierenden zweiten Anteils die abgegebene Gesamtleistung mit einer Rate von etwa 2 - 5 % innerhalb eines Zeitintervalls von weniger als 30 s, vorzugsweise von etwa 3 - 5 % in weniger als 5 s, erhöht bzw. abgesenkt wird.

5. Verfahren nach Anspruch 4, **dadurch gekennzeichnet, dass** bei der anschließenden langsamen Erhöhung bzw. Absenkung des auf der brennstoffbetriebenen Erwärmung basierenden ersten Anteils die abgegebene Gesamtleistung mit einer Rate von etwa 2 - 5 % innerhalb eines Zeitintervalls von mindestens 1,5 min, vorzugsweise mindestens 3 min, erhöht bzw. abgesenkt wird.

6. Verfahren nach einem der Ansprüche 1 - 5, **dadurch gekennzeichnet, dass** die solarthermische Erwärmung des Trägerfluids in einem Normalbetriebszustand reduziert wird, um die positive Reserveleistung zur Verfügung zu stellen.

7. Verfahren nach einem der Ansprüche 1 - 6, **dadurch gekennzeichnet, dass** von dem solarthermisch erwärmten Trägerfluid aufgenommene Wärme an einen Wasser-Dampf-Kreislauf des brennstoffbetriebenen Kraftwerkteils (1) übertragen wird.

8. Verfahren nach Anspruch 7, **dadurch gekennzeichnet, dass** das solarthermisch erwärmte Trägerfluid Wasser oder Dampf umfasst und in den Wasser-Dampf-Kreislauf des brennstoffbetriebenen Kraftwerkteils (1) eingespeist wird.

9. Verfahren nach Anspruch 7, **dadurch gekennzeichnet, dass** von dem solarthermisch erwärmten Trägerfluid aufgenommene Wärme mittels eines Wärmetauschers (14, 17, 38) an den Wasser-Dampf-Kreislauf übertragen wird.

10. Verfahren nach Anspruch 7, **dadurch gekennzeichnet, dass** von dem solarthermisch erwärmten Trägerfluid aufgenommene Wärme an ein Speisewasser des brennstoffbetriebenen Kraftwerkteils (1) übertragen wird.

11. Verfahren nach Anspruch 10, **dadurch gekennzeichnet, dass** von dem solarthermisch erwärmten Trägerfluid aufgenommene Wärme mittels eines Wärmetauschers (17) auf das aus einem Speisewasserbehälter (15) entnommene und einem Dampferzeuger (2) zuzuführende Speisewasser übertragen wird.

12. Verfahren nach Anspruch 10, **dadurch gekennzeichnet, dass** von dem solarthermisch erwärmten Trägerfluid aufgenommene Wärme mittels eines Wärmetauschers (14) auf das aus einem einer Turbine (11) nachgeschalteten Kondensator (12) austretende und einem Speisewasserbehälter (15) zuzuführende Speisewasser übertragen wird.

13. Verfahren nach Anspruch 10, **dadurch gekennzeichnet, dass** von dem solarthermisch erwärmten Trägerfluid aufgenommene Wärme mittels eines Wärmetauschers (38) auf Wasser übertragen wird, welches aus einem Speisezusatzwasser-Vorrat (39) einem Speisewassersystem (15) zugeführt wird.

## Claims

1. A method of operating a hybrid power plant with the heating of carrier fluids by fuel and by solar energy,
wherein a first proportion of the total power produced by the power plant is based on the heating of carrier fluids by fuel and a second proportion of the total power produced by the power plant is based on the solar energy heating of carrier fluids, wherein heat absorbed by a carrier fluid heated by solar energy is transmitted to a circuit of a carrier fluid of a part (1) of the power plant operated with fuel,
wherein if, starting from a base condition, an abrupt increase or reduction in the total power produced by the power plant is necessary, at first the second proportion based on solar energy heating is correspondingly increased or reduced rapidly in order to provide a positive or negative power reserve and
then the first proportion based on heating by fuel is correspondingly increased or reduced slowly and the second proportion based on heating by solar energy is correspondingly reduced or increased again,
wherein the second proportion based on heating by solar energy is increased or reduced
by focusing or defocusing of solar collectors,
by increased or reduced throughput of the carrier fluid heated by solar energy and/or
by emptying or filling a reservoir filled with the carrier fluid heated by solar energy.

2. A method as claimed in claim 1, **characterised in that** the circuit for the carrier fluid of the part (1) of the power plant operated with fuel, to which the heat absorbed by a carrier fluid heated by solar energy is transmitted, is coupled to a turbine unit (5 - 11) so that the carrier fluid heated by solar energy does not need to be coupled to a separate turbine unit.

3. A method as claimed in claim 1 or 2, **characterised in that** the second proportion of the total power produced by the power plant, which is based on the heating of carrier fluids by solar energy, is less than 50%, preferably less than 30%.

4. A method as claimed in one of claims 1 to 3, **characterised in that**, in the rapid increase or reduction of the second proportion of the total power produced based on heating by solar energy, the increase or reduction is effected at a rate of about 2-5% within a time period of less than 30s, preferably of about 3-5% in less than 5s.

5. A method as claimed in claim 4, **characterised in that**, in the subsequent slow increase or reduction in the first proportion of the total power produced based on heating by fuel, the increase or reduction is effected at a rate of about 2-5% within a time period of at least 1.5min, preferably at least three min.

6. A method as claimed in one of claims 1 to 5, **characterised in that** the heating by solar energy of the carrier fluid is reduced in a normal operating state in order to provide the positive power reserve.

7. A method as claimed in one of claims 1 to 6, **characterised in that** heat absorbed from the carrier fluid heated by solar energy is transmitted to a water-steam circuit of the part (1) of the power plant operated with fuel.

8. A method as claimed in claim 7, **characterised in that** the carrier fluid heated by solar energy includes water or steam and is fed into the water-steam circuit of the part (1) of the power plant operated with fuel.

9. A method as claimed in claim 7, **characterised in that** heat absorbed from the carrier fluid heated by solar energy is transmitted to the water-steam circuit by means of a heat exchanger (14, 17, 38).

10. A method as claimed in claim 7, **characterised in that** heat absorbed from the carrier fluid heated by solar energy is transmitted to feed water of the part (1) of the power plant operated with fuel.

11. A method as claimed in claim 10, **characterised in that** heat absorbed by the carrier fluid heated by solar energy is transmitted by means of a heat exchanger (17) to the feed water, which is removed from a feed water tank (15) and is to be supplied to a steam generator (2).

12. A method as claimed in claim 10, **characterised in that** heat absorbed by the carrier fluid heated by solar energy is transmitted by means of a heat exchanger (14) to the feed water discharging from a condenser (12) connected downstream of a turbine (11) and to be supplied to a feed water tank (15).

13. A method as claimed in claim 10, **characterised in that** heat absorbed by the carrier fluid heated by solar energy is transferred by means of a heat exchanger (38) to water, which is supplied from an additional feed water supply (39) to a feed water system (15).

## Revendications

1. Procédé pour faire fonctionner une centrale électrique hybride avec un chauffage de fluides porteurs effectué avec un combustible et à la chaleur solaire,
dans lequel une première fraction de la puissance totale délivrée par la centrale électrique repose sur le chauffage de fluides porteurs effectué avec un combustible et une seconde fraction de la puissance totale délivrée par la centrale électrique repose sur le chauffage de fluides porteurs à la chaleur solaire,
dans lequel la chaleur absorbée par un fluide porteur chauffé à la chaleur solaire est transmise à un circuit d'un fluide porteur d'une partie (1) de la centrale électrique fonctionnant avec un combustible,
dans lequel, lorsqu'à partir d'un état initial, une augmentation ou une diminution brusque de la puissance totale délivrée par la centrale électrique est nécessaire,
tout d'abord à court terme, la seconde fraction reposant sur le chauffage à la chaleur solaire est de manière correspondante augmentée ou diminuée pour fournir une puissance de réserve positive ou négative,
puis, la première fraction reposant sur le chauffage effectué avec un combustible est de manière correspondante augmentée ou diminuée lentement et, de manière correspondante, la seconde fraction reposant sur le chauffage à la chaleur solaire est à nouveau diminuée ou augmentée,
dans lequel la seconde fraction reposant sur le chauffage à la chaleur solaire est augmentée ou diminuée par focalisation ou défocalisation de capteurs solaires,
par augmentation ou diminution du débit du fluide porteur chauffé à la chaleur solaire, et/ou
par vidage ou remplissage d'un accumulateur rempli du fluide porteur chauffé à la chaleur solaire.

2. Procédé selon la revendication 1, **caractérisé en ce que** le circuit du fluide porteur de la partie (1) de la centrale électrique fonctionnant avec un combustible, auquel est transmis la chaleur absorbée par un fluide porteur chauffé à la chaleur solaire, est couplé à une unité de turbine (5 à 11) si bien que le fluide porteur chauffé à la chaleur solaire n'a pas besoin d'être couplé à une unité de turbine séparée.

3. Procédé selon la revendication 1 ou 2, **caractérisé en ce que** la seconde fraction de la puissance totale délivrée par la centrale électrique, qui repose sur le chauffage de fluides porteurs effectué à la chaleur solaire, est inférieure à 50 %, de préférence inférieure à 30 %.

4. Procédé selon l'une quelconque des revendications 1 à 3, **caractérisé en ce que**, lors de l'augmentation ou de la diminution à court terme de la seconde fraction reposant sur le chauffage à la chaleur solaire, la puissance totale délivrée est augmentée ou diminuée d'un taux d'environ 2 à 5 % dans un intervalle de temps de moins de 30 s, de préférence d'environ 3 à 5 % en moins de 5 s.

5. Procédé selon la revendication 4, **caractérisé en ce que**, lors de l'augmentation ou de la diminution lente consécutive de la première fraction reposant sur le chauffage effectué au combustible, la puissance totale délivrée est augmentée ou diminuée d'un taux d'environ 2 à 5 % dans un intervalle de temps d'au moins 1, 5 min, de préférence d'au moins 3 min.

6. Procédé selon l'une quelconque des revendications 1 à 5, **caractérisé en ce que** le chauffage du fluide porteur effectué à la chaleur solaire est réduit à un état de fonctionnement normal pour fournir la puissance de réserve positive.

7. Procédé selon l'une quelconque des revendications 1 à 6, **caractérisé en ce que** la chaleur absorbée par le fluide porteur chauffé à la chaleur solaire est transmise à un circuit eau-vapeur d'eau de la partie (1) de la centrale électrique fonctionnant avec un combustible.

8. Procédé selon la revendication 7, **caractérisé en ce que** le fluide porteur chauffé à la chaleur solaire comprend de l'eau ou de la vapeur d'eau et est injecté dans le circuit eau-vapeur d'eau de la partie (1) de la centrale électrique fonctionnant avec un combustible.

9. Procédé selon la revendication 7, **caractérisé en ce que** la chaleur absorbée par le fluide porteur chauffé à la chaleur solaire est transmise au moyen d'un échangeur de chaleur (14, 17, 38) au circuit eau-vapeur d'eau.

10. Procédé selon la revendication 7, **caractérisé en ce que** la chaleur absorbée par le fluide porteur chauffé à la chaleur solaire est transmise à une eau d'alimentation de la partie (1) de la centrale électrique fonctionnant avec un combustible.

11. Procédé selon la revendication 10, **caractérisé en ce que** la chaleur absorbée par le fluide porteur chauffé à la chaleur solaire est transmise au moyen d'un échangeur de chaleur (17) à l'eau d'alimentation prélevée d'une cuve d'eau d'alimentation (15) et à acheminer à un générateur de vapeur d'eau (2).

12. Procédé selon la revendication 10, **caractérisé en ce que** la chaleur absorbée par le fluide porteur chauffé à la chaleur solaire est transmise au moyen d'un échangeur de chaleur (14) à l'eau d'alimentation sortant d'un condenseur (12) monté en aval d'une turbine (11) et à acheminer à une cuve d'eau d'alimentation (15).

13. Procédé selon la revendication 10, **caractérisé en ce que** la chaleur absorbée par le fluide porteur chauffé à la chaleur solaire est transmise au moyen d'un échangeur de chaleur (38) à de l'eau qui est acheminée d'un réservoir (39) d'eau d'alimentation d'appoint à un système d'eau d'alimentation (15).
